# EUROPEAN PATENT SPECIFICATION

(11) **EP 0 289 481 B1**
(45) Date of publication and mention of the grant of the patent: **27.10.1993**
(21) Application number: 88870072.1
(22) Date of filing: 27.04.1988
(51) Int. Cl.: C09D 5/14

(54) **Self-polishing antifouling paints**
Selbstpolierende Anwuchsverhindernde Anstrichfarben
Peintures antisalissures autopolissantes

(30) Priority: 28.04.1987 GB 8710024; 19.02.1988 GB 8803948
(43) Date of publication of application: 02.11.1988
(73) Proprietor: FINA RESEARCH S.A., B-7181 Feluy (BE)
(72) Inventor: Braeken, Jozef, B-9470 Denderleeuw (BE); Dekerk, Jean-Paul, B-3030 Heverlee (BE); Van der Poel, Hendrik, NL-1186 XG Amstelveen (NL); Verborgt, Jozef, NL-1421 Uithoorn (NL); Haak, Peter, NL-1852 LA Heiloo (NL)
(74) Representative: Leyder, Francis

(56) References cited:
- US-A- 4 313 860
- PATENT ABSTRACTS OF JAPAN, vol. 8, no. 122 (C-227), 8th June 1984; & JP-A-59 036 166 (NIPPON YUSHI) 28-02-1984
- Prog. Polym. Sa. Vol 14, p. 297-301 (1989)

## Description

The invention relates to new antifouling (AF) marine paint compositions, which may be prepared totally free of organotin and which give coatings having self-polishing properties.

Self-polishing antifouling coatings are known to the art. They gradually dissolve so that (i) a fresh anti-fouling paint surface is continuously revealed, and (ii) moving seawater smoothes the surface of the coating. British Patent 1,124,297 discloses a film-forming copolymer containing a triorganotin comonomer which gives self-polishing antifouling coatings.

Japanese patent JP-A-59036166 discloses an antifouling coating comprising a vehicule consisting of a blend prepared by incorporating (A) 1-99 Wt % of a water-insoluble resin with (B) 99-1 Wt % of a water-soluble resin; the water-soluble resin is constituted by (i) a polymer from a monomer having in one molecule, N-vinyl cyclic amide-or imide bond or (ii) a copolymer from the component (i) and a second monomer with no free carboxyl-or hydroxyl group.

The known self-polishing antifouling paints use binders which are linear polymers containing side groups (also called leaving groups) which are liberated from the polymer by reaction with seawater, the residual polymer being sufficiently dispersible or soluble to be swept away from the paint surface, exposing a fresh layer of the binder able to undergo a similar reaction with seawater.

Coatings from such self-polishing paints retain their initial smoothness and may even become smoother from the action of relatively moving water.

The gradual thinning of the paint film controls the release of a biocide active against fouling, present as a pigment in the paint and/or released as a leaving group. Thus, the biocide contained in the paint tends to be delivered from the surface at a relatively constant rate.

Most self-polishing paints employ binders which comprise triorganotin ester leaving groups. The triorganotin ester readily undergoes the hydrolysis on which the self-polishing action is dependent, and the triorganotin released provides a biocidal action. Examples of such paints may be found in British Patents 1,124,297 and 1,457,590, but also in European Patent Applications 51,930, 151,809 and 218,573, and Japanese Patent Application 231061/61 and 231062/61. British Patent Application 2,159,827 discloses similar paints with diorganotin leaving groups.

Many countries are introducing new stringent water quality programs, some of which call for a phased reduction in the organotin content of marine paints. There are also cost advantages in replacing the triorganotin comonomers. For example, European Patent 69,559 discloses a copolymer prepared from quinolinyl esters of olefinically unsaturated carboxylic acid with other olefinically unsaturated comonomers, and International Patent Application WO 84/02915 suggests a wide range of organic leaving groups for use in antifouling paint binders, but it has been said that these generally do not hydrolyse quickly enough in seawater. In European Patent Application 204,444, there is disclosed a binder which is an hydrolysable polymer prepared with a triaryl(methyl)methacrylate comonomer. However, it is known in the art that the esterification reactions are more difficult with all these comonomers than with triorganotin comonomers; therefore, the hydrolysis will be more difficult. This explains why a commercial development based on any of these copolymers is still awaited.

International Patent Application WO 86/02660 discloses that certain polycarboxylic polymers, substantially non ionic, are changed by reaction with seawater into polycarboxylate polymers sufficiently dispersible or soluble, and may be used as binders for self-polishing AF paints. However, it is readily apparent that the resulting coatings swell when immersed. Also, these paints, which typically contain ZnO or cuprous oxide as the toxic agent, gel on storage.

There is therefore a need for organotin-free self-polishing antifouling marine paints which do not have these drawbacks.

The Applicant has found a new type of marine paint composition, which may be prepared without any organotin, giving self-polishing antifouling coatings.

The marine paint composition according to the invention comprises:
(i) a first component selected from
   (a) one or more rosin-based components,
   (b) one or more sparingly soluble metal salts of a saturated C₆-C₁₂ fatty acid selected from branched chain acids and/or alicyclic acids, and mixtures of (a) and (b);
(ii) as binder, a polymer prepared by polymerisation of
   (a) from 5 to 40 wt % of at least one monomer A of general formula 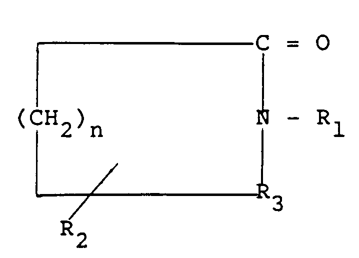 wherein either R₁ is an alkenyl group and R₂ is selected from H and alkyl groups or R₂ is an alkenyl group and R₁ is selected from H and alkyl groups, R₃ is selected from methylene and carbonyl, and n is an integer ≧1,
   (b) from 5 to 45 wt % of at least one acrylic comonomer B, the total of A + B amounting to from 15 to 75 wt % of the monomer composition, and
   (c) the balance being from 25 to 85 wt % of at least one C₁ - C₄ alkyl methacrylate and/or styrene comonomer C;
   the weight ratio of the rosin-based component (i) (a) to the polymer (ii) being from 10:90 to 70:30, and/or the weight ratio of the said sparingly soluble salt (i) (b) to the polymer being from 1:50 to 1:1;
(iii) at least one sparingly soluble metalliferous pigment; and
(iv) at least one marine biocide which may or may not be identical to the pigment.

The invention is based on a totally new concept, based upon the combination of a non-reactive binder with a slowly dissolving rosin based component or a very slowly dissolving metal salt. Although not wishing to be bound by theory, it is believed that this may be due to an interaction between the rosin or the metal salt and the N-CO parts on the copolymer.

In one preferred embodiment of the present invention, the marine paint compositions of the invention contain rosin.

It is really surprising that such compositions give self-polishing coatings, because the prior art teaches that rosin cannot be used in self-polishing paints. Known rosin-based antifouling paints may be divided in two groups according to the solubility of the matrix. It is alleged that soluble-matrix rosin-based paints erode in service to form a brittle matrix of spent rosin which, although it maybe gradually washed from the hull surface by seawater, increases in roughness with time and has a very limited lifetime. On the other hand, insoluble-matrix rosin-based paints contain some vinyl resin and a lot of sparingly soluble pigments to open the surface; when the pigment is gradually washed by seawater, the surface becomes rougher because the binder is not washed away. Rosin is a loosely used term, denoting the result of a harvesting of the gum exudations from surface cuts made in certain species of trees. Rosin is usually defined as the product obtained from pines; similar products include congo, damar, kauri and manila gums. Other processes for obtaining rosin include dissolving wood rosin from pine stumps after forests have been felled, or refining a by-product of the Kraft paper manufacturing process to produce tall oil rosin.

Pine-originating rosin is preferably chosen, although similar products may be contemplated providing they have a similar hydrophilic/lipophilic balance.

The principal component (about 80 wt %) of rosin is abietic acid, also called sylvic acid (Chemical Abstracts Service Registry Number: 514-10-3), which could be used instead of rosin. The preferred rosin-based components are rosin itself, its copper or zinc derivatives, hereinafter called copper resinate and zinc resinate, other resinic salts having a comparable solubility, or mixtures thereof. The salts are prepared by any known methods, typically by methathesis with the metal carbonate, hydroxide or hydroxycarbonate. In some cases, the transformation of abietic acid into salts thereof may upgrade properties like the melting point, hardness, durability, water or solvent resistance.

It is known that reactions may occur within the paint, for example abietic acid can partially react with other components of the paint like Zn0, Cu₂0 or tributyltin oxide, or partial metathesis can occur between metal resinates and other metal derivatives contained in the paint.

In an alternative preferred embodiment of the present invention, the marine paint compositions of the invention contain one or more sparingly soluble metal salts of a saturated fatty acid having from 6 to 12 carbon atoms, preferably from 8 to 11 carbon atoms, selected from branched-chain acids, alicyclic acids, or mixtures thereof. The expression "sparingly soluble" is known in the art of marine paint (see e.g. U.S. Patent No. 4,407,997), where it characterizes some of the compounds usually defined as water-insoluble, as opposed to highly insoluble ones. As metal salt, there is generally used a transition metal salt, preferably selected from zinc, copper, cobalt or zirconium salts, or mixtures thereof, more preferably a zinc and/or a copper salt. These metal salts often contain a low percentage of the corresponding acids as one of the impurities. As examples of branched chain acids, there may be cited single-branched acids, among which 2-ethylhexanoic acid is preferred, or preferably tertiary acids. As examples of alicyclic acids, there may be cited the naphthenic acids, which are a mixture of acids of which the structure is predominantly a cyclopentane ring with the carbonyl group at the end of an alkyl side-chain.

It is known that reactions may occur within these paints, for example partial metathesis can occur between metal salts of fatty acids and other metal derivatives contained in the paint.

The non-reactive binder is a polymer prepared by polymerisation of
(a) from 5 to 40 wt % of at least one monomer A of general formula 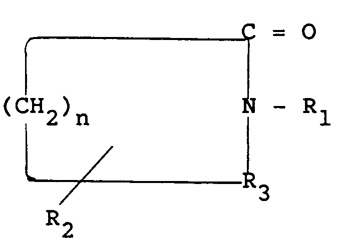 wherein either R₁ is an alkenyl group and R₂ is selected from H and alkyl groups or R₂ is an alkenyl group and R₁ is selected from H and alkyl groups, R₃ is selected from methylene and carbonyl, and n is an integer ≧ 1;
(b) from 5 to 45 wt % of at least one acrylic comonomer B, the total of A + B amounting to from 15 to 75 wt % of the monomer composition, and
(c) the balance being from 25 to 85 wt % of at least one C₁ - C₄ alkyl methacrylate and/or styrene comonomer C.

As monomer A, there may be used any monomer, or combination of monomers, as hereinbefore described. Preferred monomers A are the cyclic tertiary amides having a vinyl or alkenyl function, the most preferred being N-vinylpyrrolidone, N-vinylpiperidone and N-vinylcaprolactam.

The monomers A represent from 5 to 40 wt % of the monomers, preferably from 15 to 30 wt %. If amounts greater than 40 wt % are used, the resulting coating will swell in the seawater, and hence it will have low mechanical properties. On the other hand, if amounts lower than 5 wt % were used, the resulting copolymer will not have the desired properties.

Comonomers B are well known in the film-forming art. Preferred examples of acrylic monomers include methyl acrylate, ethyl acrylate, propyl acrylate, butyl acrylate, amyl acrylate, hexyl acrylate, 2-ethylhexyl acrylate, the most preferred being butyl acrylate.

The comonomers B represent from 5 to 45 wt % of the monomers, preferably from 15 to 40 wt %, more preferably from 15 to 30 wt%. When using higher amounts, the resulting coating is excessively soft and sensitive to mechanical damage.

The preferred comonomer C is methyl methacrylate.

The copolymer can contain up to 5 wt % of acrylic and/or methacrylic acid units, instead of the corresponding esters, although care must be taken to avoid gelation of the paint when using a copolymer containing free acid functions.

The binder can be prepared by addition polymerisation using a free radical catalyst, such as benzoyl peroxide, t-butyl peroxybenzoate, t-butyl peroxy 2-ethylhexanoate or azobis-isobutyronitrile, in an organic solvent such as xylene, toluene, butyl acetate, butanol, 2-ethoxy ethanol, cyclohexanone, 2-methoxy ethanol, 2-butoxy ethanol, methyl isobutyl ketone, methyl isoamyl ketone, (m)ethyl amyl ketone and/or 2-ethoxyethylacetate. The polymerisation may be carried out by heating all the ingredients in the solvent or preferably by gradually adding the monomers and catalyst to the heated solvent. A chain transfer agent such as a mercaptan can also be used to produce polymers of lower molecular weight. When xylene is used as the organic solvent, polymerisation is preferably carried out at a temperature in the range of 70-140°C.

The weight ratio of the rosin-based component (i) (a) to the binder (ii) is preferably from 10:90 to 70:30, more preferably from 20:80 to 60:40, most preferably from 25:75 to 50:50.

The weight ratio of the metal salt of a fatty acid, component (i) (b) to the binder (ii) is preferably from 1:50 to 1:1, preferably from 1:20 to 2:3.

The paint composition according to the invention also comprises at least one sparingly soluble metalliferous pigment, and optionally one or more pigments which are highly insoluble in seawater and/or other biocides.

The metalliferous pigment sparingly soluble in seawater is exemplified by cuprous thiocyanate, cuprous oxide, zinc oxide, cupric acetate meta-arsenate, or zinc chromate. The paint preferably includes at least one metalliferous pigment selected from zinc oxide, cuprous oxide and cuprous thiocyanate and pigments whose seawater solubility is similar to theirs. These pigments have a seawater solubility such that the pigment particles do not survive at the paint surface. The pigment has the effect of inducing the overall smoothing which the relatively-moving seawater exerts on the paint film, minimising localised erosion and preferentially removing excrescences formed during the application of the paint. Mixtures of sparingly soluble pigments can be used, the most preferred being a mixture of zinc oxide, which is most effective at inducing the gradual dissolution of the paint, with cuprous oxide and/or cuprous thiocyanate, which are more effective marine biocides, said mixture preferably comprising at least 25 wt % of cuprous oxide and/or thiocyanate, the balance being zinc oxide.

The paint composition can additionally contain a pigment which is highly insoluble in seawater, such as titanium dioxide or ferric oxide. Such highly insoluble pigments can be used at up to 40 percent by weight of the total pigment component of the paint. The highly insoluble pigment has the effect of retarding the dissolution of the paint.

The proportion of pigment to polymer is generally such as to give a pigment volume concentration of at least 25 percent, preferably at least 35 percent, in the dry paint film. The upper limit of pigment concentration is the critical pigment volume concentration. Paints having pigment volume concentrations of about 50 percent, for example, have been found very effective for smoothing in seawater and preventing fouling.

The paint can contain other biocides effective as antifouling agents. Examples of such biocides, are di-thiocarbamate derivatives such as zinc dimethyl dithiocarbamate, zinc ethylene bis(dithiocarbamate), zinc diethyl dithiocarbamate, cuprous ethylene bis-di-thiocarbamate or 2-(N,N-dimethyl thiocarbamyl thio)-5- nitro thiazole, substituted isothiazolones particularly halogenated N-substituted isothiazolones, N-dimethyl N′- 3,4-dichlorophenyl urea, and tetramethyl thiuram disulphide. Other known biocides include triorganotin derivatives such as tributyltin oxide, tributyltin fluoride or triphenyltin fluoride.

The invention is described further by the following examples which are intended to be illustrative and by no means limiting.

### Example 1

### a. Preparation of the copper resinate

765 parts by weight (pbw) of rosin were dissolved in 275 pbw of white spirit, heated to about 130°C, and 100 pbw of copper hydroxycarbonate were added while stirring. The temperature was increased under reflux to about 175°C until the mixture clears and the colour changes from green to light brown. After cooling, the mixture was diluted to about 70wt % of dry matter by adding 75 pbw of isopropyl alcohol.

### b. Preparation of the terpolymer

A terpolymer was produced by gradually adding over a period of about five hours 16.7 kg of methyl methacrylate (MMA), 8.3 kg of butyl acrylate (BA) and 1 kg of tert-butyl peroxybenzoate (TBP) to a solution of 12.5kg of vinylpyrrolidone (VP), 8.3 kg MMA and 4.2 kg BA in 40.9 kg of xylene heated at 115°C while stirring.

After about 12 hours heating, no further polymerisation was observed by monitoring residual monomers by gas chromatography. The solution was then heated to 130°C for about one hour to destroy any residual activity of the catalyst. The product was cooled and diluted with 9.1 kg of xylene to obtain an approximately 50 wt % solution of polymer in xylene.

### c. Preparation of the paint composition

4.37 pbw of the copper resinate solution were mixed with 8.53 pbw of the polymer solution, then blended with 30.96pbw of cuprous oxide, 29.38 pbw of zinc oxide, 0.79 pbw of bentonite (as anti-setting agent), 2.18 pbw of isobutyl alcohol, and a further 23.79 pbw of xylene.

### d. Evaluation of the self-polishing properties

The antifouling paint thus obtained was tested for its self-polishing properties according to the following procedure. A steel disc of 20 cm diameter was first coated with a 220 µm dry film thickness layer of a commercially available anti-corrosive paint based on coal tar and epoxy resin. The antifouling paint was applied as a layer having a dry film thickness of about 120 µm within 48 hours from the time the anti-corrosive paint layer became dry to the touch. After drying, the disc was rotated in a tank filled with continuously renewed natural seawater at a temperature of 20°C. The circumferential speed of the disc was about 19 knots (35 km/h).

Thickness measurements were made after seven days conditioning, then 294 days thereafter, on 10 different places at 9 cm from the disc's centre. The average erosion rate was 3.0 µm/month.

For comparative purposes, a second steel disc was coated according to the same procedure as above, and conditioned during a period of seven days ending 294 days after the conditioning of the first plate. The eroded coating was slightly smoother than the reference coating.

### e. Evaluation of the antifouling properties

The paint thus obtained was also tested for antifouling activity by applying it to a plaque over a vinyl resins/tar anti-corrosive paint, mounting the plaque on a panel and immersing the panel from a raft in an estuary off Southern Netherlands for 12 months. Each panel also included plaques coated with a non-toxic control (which became heavily fouled with seaweed and some animal life within 4 weeks).

No weed or animal fouling was observed on the panels coated with the paint of the invention, and the algal slime was practically non-existent.

### Example 2

Zinc resinate was prepared as an approximately 70 wt % solution according to the procedure disclosed in Example 1(a), using the following proportions:

| | |
|---|---|
| - rosin | 200 pbw |
| - white spirit | 72 pbw |
| - zinc carbonate | 27 pbw |
| - isopropanol | 19 pbw |

The terpolymer was prepared as described in Example 1(b).

The paint composition was:

| | |
|---|---|
| - zinc resinate | 4.38 pbw of the 70 wt % solution |
| - terpolymer | 8.56 pbw of the 50 wt % solution in xylene |
| - cuprous oxide | 31.07 pbw |
| - zinc oxide | 29.49 pbw |
| - bentonite | 0.79 pbw |
| - additional xylene | 21.72 pbw |
| - isobutanol | 2.19 pbw |
| - isopropanol additional white spirit | 0.38 pbw 1.42 pbw |

All properties were evaluated as described in Example 1.

The average erosion rate was of 2.1 µm/month. The eroded coating was slightly smoother than the reference coating. The antifouling properties were as good as those of the copper resinate-based coating.

### Example 3

A paint was prepared with the following ingredients:

| | |
|---|---|
| - rosin (undissolved) | 3.65 pbw |
| - terpolymer (Example 1(b)) | 8.04 pbw of the 50 wt % solution in xylene |
| - cuprous oxide | 31.92 pbw |
| - zinc oxide | 30.30 pbw |
| - bentonite | 0.81 pbw |
| - additional xylene | 19.91 pbw |
| - isobutanol | 4.06 pbw |

The average erosion rate was of 3.8 µm/month, and the smoothness of the eroded coating was unmodified.

### Comparative Examples 1 and 2

A copolymer was prepared by gradually adding over a period of about four hours 460 g of MMA, 220 g of ethyl acrylate (EA) and 20 g of TBP to a solution of 220 g of MMA and 100 g of EA in 1 1 of xylene heated at 115°C while stirring.

After about 12 hours heating, no further polymerization was observed by monitoring residual monomers by gas chromatography. The solution was then heated to 130°C for about one hour to destroy any residual activity of the catalyst. The product was cooled and diluted with 130 g of xylene to obtain an approximately 50 wt % solution of polymer in xylene. Two paint compositions were prepared:
- - comparative example 1 :: with copper resinate, as described in Example 1 (c),
- - comparative example 2 :: with rosin as described in Example 3.

When evaluating the self-polishing properties according to the procedure of Example 1(d), no erosion was observed.

This example shows that when the polymer does not satisfy the requirements of the present invention, the paint has no self-polishing properties (even though BA was replaced as comonomer by the more hydrophilic EA).

### Comparative Example 3

An antifouling paint was prepared from :

| | |
|---|---|
| - rosin | 19.8 pbw |
| - phenolic varnish, neutralized with Ca0 in a ball mill, used as plasticiser | 6.6 pbw |
| - calcium carbonate | 19.0 pbw |
| - cuprous oxide | 27.0 pbw |
| - solvents | 23.6 pbw (toluene/white spirit 1:1) |
| - additives | 4.0 pbw |

The paint was prepared by first incorporating the calcium carbonate in the vehicle and ball milling during 24 hours. Cuprous oxide was then added and dispersed during three hours.

When evaluating the properties as described in Example 1, it was found that the surface had become rougher. Further, after 11 months exposure to fouling, an important amount of algal slime was observed although macrofouling (barnacles, etc.) was rare.

### Example 4

### a. Preparation of the copolymer

A copolymer was produced by gradually adding over a period of about five hours 12.7 kg of methyl methacrylate (MMA), 0.7 kg of methacrylic acid (MA), 13.3 kg of butyl acrylate (BA) and 1 kg of tert-butyl peroxybenzoate (TBP) to a solution of 10.0 kg of vinylpyrrolidone (VP), 6.3 kg MMA, 6.7 kg BA and 0.3 kg MA in a mixture of 28.6 kg of xylene and 12.3 kg of n-butanol heated at 105°C while stirring.

After about 12 hours heating, no further polymerisation was observed by monitoring residual monomers by gas chromatography. The solution was then heated to 130°C for about one hour to destroy any residual activity of the catalyst. The product was cooled and diluted with 2.7 kg of n-butanol and 6.4 kg of xylene to obtain an approximately 50 wt % solution of polymer in xylene/n-butanol.

### b. Preparation of the paint composition

88 parts by weight (pbw) of the polymer solution were mixed with 11 pbw of zinc Siccatol (Trade Mark of AKZO Chemie for a zinc salt of saturated branched-chain synthetic fatty acids, having a zinc content of 10%), then blended with 177 pbw of cuprous oxide, 58 pbw of zinc oxide, 3 pbw of bentonite (as anti-settling agent), 30 pbw of chalk, 40 pbw of isobutylalcohol, and a further 80 pbw of xylene.

### c. Evaluation of the self-polishing properties

The antifouling paint thus obtained was tested for its self-polishing properties according to the following procedure. A steel disc of 20 cm diameter was first coated with a 220 µm dry film thickness layer of a commercially available anti-corrosive paint based on coal tar and epoxy resin. The antifouling paint was applied as a layer having a dry film thickness of about 120 µm within 48 hours from the time the anti-corrosive paint layer became dry to the touch. After drying, the disc was rotated in a tank filled with continuously renewed natural seawater at a temperature of 20°C. The circumferential speed of the disc was about 19 knots (35 km/h).

Thickness measurements were made after seven days conditioning, then 91 days thereafter, on 10 different places at 9 cm from the disc's centre. The average erosion rate was 6 µm/month.

For comparative purposes, a second steel disc was coated according to the same procedure as above, and conditioned during a period of seven days ending 91 days after the conditioning of the first plate. The eroded coating was slightly smoother than the reference coating.

### d. Evaluation of the antifouling properties

The paint thus obtained was also tested for antifouling activity by applying it to a plaque over a vinyl resins/tar anti-corrosive paint, mounting the plaque on a panel and immersing the panel from a raft in an estuary off Southern Netherlands for 6 months. Each panel also included plaques coated with a non-toxic control (which became heavily fouled with seaweed and some animal life within 4 weeks).

No weed or animal fouling was observed on the panels coated with the paint of the invention, and the algal slime was practically non-existent.

### Example 5

68 pbw of a polymer solution prepared as in Example 4(a) were mixed with 37 pbw of copper naphtenate, then blended with 177 pbw of cuprous oxide, 17 pbw of zinc ethylene dithiocarbamate, 3 pbw of bentonite, 30 pbw of chalk, 40 pbw of isobutylalcohol, and a further 80 pbw of xylene. All properties were evaluated as described in Example 4. The average erosion rate was of 5µm/month; the eroded coating was slightly smoother than the reference coating. The antifouling properties were as good as those observed in Example 4.

## Claims

1. Marine paint composition comprising:
(i) a first component selected from
(a) one or more rosin-based components selected from rosin, copper resinate, zinc resinate, other resinic salts having a comparable solubility, or mixtures thereof.,
(b) one or more sparingly soluble metal salts of a saturated C₆-C₁₂ fatty acid selected from branched chain acids and/or alicyclic acids,
and mixtures of (a) and (b);
(ii) as binder, a polymer prepared by polymerisation of
(a) from 5 to 40 wt % of at least one monomer A of general formula 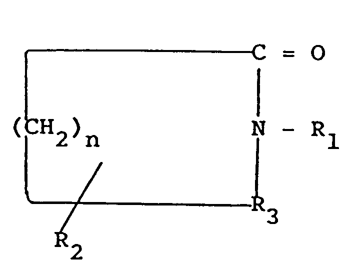 wherein either R₁ is an alkenyl group and R₂ is selected from H and alkyl groups or R₂ is an alkenyl group and R₁ is selected from H and alkyl groups, R₃ is selected from methylene and carbonyl, and n is an integer comprised between 1 and 4.
(b) from 5 to 45 wt % of at least one acrylic comonomer B, the total of A + B amounting to from 15 to 75 wt % of the monomer composition, and
(c) the balance being from 25 to 85 wt % of at least one C₁ - C₄ alkyl methacrylate and/or styrene comonomer C;
the weight ratio of the rosin-based component (i) (a) to the polymer (ii) being from 10:90 to 70:30, and/or the weight ratio of the said sparingly soluble salt (i) (b) to thepolymer being from 1:50 to 1:1,
(iii) at least one sparingly soluble metalliferous pigment; and
(iv) at least one marine biocide which may or may not be identical to the pigment.

2. Paint according to Claim 1, additionally comprising, for up to 40 wt % of the total weight of the pigments, one or more pigments which is/are highly insoluble in seawater.

3. Paint according to Claim 1 or 2, wherein the rosin-based component (i) (a) is selected from rosin, copper resinate, zinc resinate, or mixtures thereof.

4. Paint according to Claim 1 or 2, wherein the said sparingly soluble metal salt (i) (b) is a salt of a transition metal, preferably selected from zinc, copper, cobalt or zirconium.

5. Paint according to Claim 4, wherein the metal salt is a zinc and/or a copper salt.

6. Paint according to Claim 1, 2, 4 or 5, wherein the saturated fatty acid has from 8 to 11 carbon atoms.

7. Paint according to Claim 1, 2, 4 or 5, wherein the saturated fatty acid is selected from branched-chain acids.

8. Paint according to Claim 1, 2, 4 or 5, wherein the saturated fatty acid is selected from alicyclic acids.

9. Paint according to Claim 8, wherein naphthenic acids are used as saturated fatty acids.

10. Paint according to any one of the preceding Claims, wherein monomer A is selected from cyclic tertiary amides having a vinyl or alkenyl function or mixtures thereof.

11. Paint according to Claim 10, wherein monomer A is selected from N-vinyl pyrrolidone, N-vinyl piperidone, N-vinyl caprolactam, or mixtures thereof.

12. Paint according to any one of the preceding Claims, wherein monomer A represents 15 to 30 wt % of the monomer composition.

13. Paint according to any one of the preceding Claims, wherein monomer B is butyl acrylate.

14. Paint according to any one of the preceding Claims, wherein monomer B represents from 15 to 30 wt % of the monomer composition.

15. Paint according to any one of the preceding Claims, wherein comonomer C is selected from C₁ - C₄ alkyl methacrylates or mixtures thereof.

16. Paint according to Claim 15, wherein comonomer C is methyl methacrylate.

17. Paint according to any one of Claims 1 to 3, and 10 to 16, wherein the weight ratio of component (i) (a): component (ii) is from 20:80 to 60:40.

18. Paint according to Claim 17, wherein the weight ratio of component (i) (a): component (ii) is from 25:75 to 50:50.

19. Paint according to any one of Claims 1, 2 and 4 to 16, wherein the weight ratio of component (i) (b): component (ii) is from 1:20 to 2:3.

20. Paint according to any one of the preceding Claims, wherein the copolymer (ii) contains up to 5 wt % of acrylic and/or methacrylic acid instead of the corresponding ester.

21. Paint according to any one of the preceding Claims, wherein the sparingly soluble metalliferous pigment is selected from zinc oxide, cuprous oxide, cuprous thiocyanate or mixtures thereof.

22. Paint according to Claim 21, wherein the sparingly soluble metalliferous pigment is a mixture comprising at least 25 wt % of cuprous oxide and/or thiocyanate, the balance being zinc oxide.

## Patentansprüche

1. Unterwasser-Anstrichzusammensetzung, die folgendes enthält:
(i) einen ersten Bestandteil, ausgewählt aus
(a) einem oder mehreren auf Kolophonium basierenden Bestandteilen, ausgewählt aus Kolophonium, Kupferresinat, Zinkresinat, anderen Harzsalzen mit einer vergleichbaren Löslichkeit oder Gemischen davon,
(b) einem oder mehreren schwer löslichen Metallsalzen einer gesättigten C₆-C₁₂-Fettsäure, ausgewählt aus verzweigtkettigen Säuren und/oder alicyclischen Säuren,
und Gemischen aus (a) und (b);
(ii) als Bindemittel ein Polymer, das hergestellt wird durch Polymerisation von
(a) 5 bis 40 Gew.-% mindestens eines Monomers A mit der allgemeinen Formel 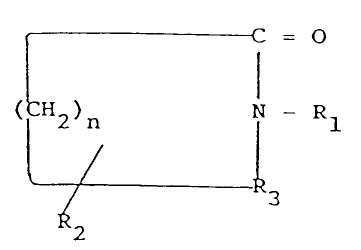 in der entweder R₁ für eine Alkenyl-Gruppe steht und R₂ aus H und Alkyl-Gruppen ausgewählt ist oder R₂ für eine Alkenyl-Gruppe steht und R₁ aus H und Alkyl-Gruppen ausgewählt ist, R₃ aus Methylen und Carbonyl ausgewählt ist und n eine ganze Zahl zwischen 1 und 4 ist;
(b) 5 bis 45 Gew.-% mindestens eines Acryl-Comonomers B, wobei A + B insgesamt 15 bis 75 Gew.-% der Monomer-Zusammensetzung betragen, und
(c) einem Rest von 25 bis 85 Gew.-% mindestens eines C₁-C₄-Alkylmethacrylat- und/oder Styrol-Comonomers C;
wobei das Gewichtsverhältnis des auf Kolophonium basierenden Bestandteils (i) (a) zum Polymer (ii) 10:90 bis 70:30 beträgt und/oder das Gewichtsverhaltnis des schwer löslichen Salzes (i) (b) zum Polymer 1:50 bis 1:1 beträgt;
(iii) mindestens ein schwer lösliches metallhaltiges Pigment und
(iv) mindestens ein Unterwasserbiozid, das identisch mit dem Pigment sein kann oder nicht.

2. Anstrich nach Anspruch 1, der außerdem für bis zu 40 Gew.-% des Gesamtgewichts der Pigmente ein oder mehrere Pigment(e) enthält, das/die stark unlöslich in Seewasser ist/sind.

3. Anstrich nach Anspruch 1 oder 2, wobei der auf Kolophonium basierende Bestandteil (i) (a) aus Kolophonium, Kupferresinat, Zinkresinat oder Gemischen davon ausgewählt ist.

4. Anstrich nach Anspruch 1 oder 2, wobei es sich bei dem schwer löslichen Metallsalz (i) (b) um ein Salz eines Übergangsmetalls handelt, das vorzugsweise aus Zink, Kupfer, Kobalt oder Zirconium ausgewählt ist.

5. Anstrich nach Anspruch 4, wobei es sich bei dem Metallsalz uni ein Zink- und/oder ein Kupfersalz handelt.

6. Anstrich nach den Ansprüchen 1, 2, 4 oder 5, wobei die gesättigte Fettsäure 8 bis 11 Kohlenstoffatome besitzt.

7. Anstrich nach den Ansprüchen 1, 2, 4 oder 5, wobei die gesättigte Fettsäure aus verzweigtkettigen Säuren ausgewählt ist.

8. Anstrich nach den Ansprüchen 1, 2, 4 oder 5, wobei die gesättigte Fettsäure aus alicyclischen Säuren ausgewählt ist.

9. Anstrich nach Anspruch 8, wobei Naphthensäuren als gesättigte Fettsäuren verwendet werden.

10. Anstrich nach einem der vorhergehenden Ansprüche, wobei das Monomer A aus cyclischen tertiären Amiden mit einer Vinyl- oder Alkenyl-Funktion oder Gemischen davon ausgewählt ist.

11. Anstrich nach Anspruch 10, wobei das Monomer A aus N-Vinylpyrrolidon, N-Vinylpiperidon, N-Vinylcaprolactam oder Gemischen davon ausgewählt ist.

12. Anstrich nach einem der vorhergehenden Ansprüche, wobei das Monomer A 15 bis 30 Gew.-% der Monomer-Zusammensetzung darstellt.

13. Anstrich nach einem der vorhergehenden Ansprüche, wobei es sich bei dem Monomer B um Butylacrylat handelt.

14. Verfahren nach einem der vorhergehenden Ansprüche, wobeidas Monomer B 15 bis 30 Gew.-% der Monomer-Zusammensetzung darstellt.

15. Anstrich nach einem der vorhergehenden Ansprüche, wobei das Comonomer C aus C₁-C₄-Allrylmethacrylaten oder Gemischen davon ausgewählt ist.

16. Anstrich nach Anspruch 15, wobei es sich bei dem Comonomer C um Methylmethacrylat handelt.

17. Anstrich nach einem der Ansprüche 1 bis 3 und 10 bis 16, wobei das Gewichtsverhältnis von Bestandteil (i) (a) : Bestandteil (ii) 20:80 bis 60:40 beträgt.

18. Anstrich nach Anspruch 17, wobei das Gewichtsverhältnis von Bestandteil (i) (a) : Bestandteil (ii) 25:75 bis 50:50 beträgt.

19. Anstrich nach einem der Ansprüche 1, 2 und 4 bis 16, wobei das Gewichtsverhältnis von Bestandteil (i) (b) : Bestandteil (ii) 1:20 bis 2:3 beträgt.

20. Anstrich nach einem der vorhergehenden Ansprüche, wobei das Copolymer (ii) bis zu 5 Gew.-% Acryl- und/oder Methacrylsäure anstelle des korrespondierenden Esters enthält.

21. Anstrich nach einem der vorhergehenden Ansprüche, wobei das schwer lösliche metallhaltige Pigment aus Zinkoxid, Kupfer(I)-oxid, Kupfer(I)-thiocyanat oder Gemischen davon ausgewählt ist.

22. Anstrich nach Anspruch 21, wobei es sich bei dem schwer löslichen metallhaltigen Pigment um ein Gemisch handelt, das mindestens 25 Gew.-% Kupfer(I)-oxid und/oder -thiocynat mit Rest Zinkoxid enthält.

## Revendications

1. Composition de peinture marine comprenant :
(i) un premier composant choisi parmi
(a) un ou plusieurs composants à base de colophane choisi parmi la colophane, le résinate de cuivre, le résinate de zinc, d'autres sels résiniques ayant une solubilité comparable, ou leurs mélanges,
(b) un ou plusieurs sels métalliques partiellement solubles d'un acide gras saturé en C₆-C₁₂ choisi parmi les acides à chaîne ramifiée et/ou les acides alicycliques,
et les mélanges de (a) et de (b);
(ii) comme liant, un polymère préparé par polymérisation de :
(a) de 5 à 40% en poids d'au moins un monomère A de formule générale 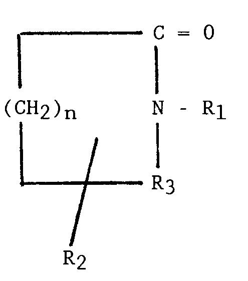 où soit R₁ est un radical alcényle et R₂ est choisi parmi H et les radicaux alkyles soit R₂ est un radical alcényle et R₁ est choisi parmi H et les radicaux alkyles, R₃ est choisi parmi le méthylène et carbonyle, et n est un entier compris entre 1 et 4,
(b) de 5 à 45% en poids d'au moins un comonomère acrylique B, la somme de A + B représentant de 15 à 75% en poids de la composition monomérique, et
(c) la différence à savoir de 25 à 85% en poids étant au moins un comonomère C du type alkyle méthacrylate en C₁-C₄ et/ou styrène;
le rapport pondéral entre le composant à base de colophane (i)(a) et le polymère (ii) varie de 10:90 à 70:30, et/ou le rapport pondéral entre ledit sel partiellement soluble (i)(b) et le polymère est compris entre 1:50 et 1:1;
(iii) au moins un pigment métallifère partiellement soluble; et
(iv) au moins un biocide marin qui peut ou non être identique au pigment.

2. Une peinture selon la revendication 1, comprenant en plus, jusqu'à 40% en poids du poids total des pigments, un ou plusieurs pigments qui sont très insolubles dans l'eau de mer.

3. Une peinture selon la revendication 1 ou 2, où le composant à base de colophane (i) (a) est choisi parmi la colophane, le résinate de cuivre, le résinate de zinc, ou leurs mélanges.

4. Une peinture selon la revendication 1 ou 2, où ledit sel métallique partiellement soluble (i) (b) est un sel d'un métal de transition, choisi de préférence parmi le zinc, le cuivre, le cobalt ou le zirconium.

5. Une peinture selon la revendication 4, où le sel métallique est un sel de zinc et/ou de cuivre.

6. Une peinture selon la revendication 1, 2, 4 ou 5, où l'acide gras saturé a de 8 à 11 atomes de carbone.

7. Une peinture selon la revendication 1, 2, 4 ou 5, où l'acide gras saturé est choisi parmi les acides à chaîne ramifiée.

8. Une peinture selon la revendication 1, 2, 4 ou 5, où l'acide gras saturé est choisi parmi les acides alicycliques.

9. Une peinture selon la revendication 8, où les acides naphténiques sont utilisés comme acides gras saturés.

10. Une peinture selon l'une quelconque des précédentes revendications, ou le monomère A est choisi parmi les amides tertiaires cycliques ayant une fonction vinylique ou alcényle, ou leurs mélanges.

11. Une peinture selon la revendication 10, où le monomère A est choisi parmi N-vinylpyrrolidone, N-vinylpiperidone, N-vinylcaprolactame, ou leurs mélanges.

12. Une peinture selon l'une quelconque des revendications précédentes, où le monomère A représente 15 à 30% en poids de la composition monomérique.

13. Une peinture selon l'une quelconque des revendications précédentes, où le monomère B est l'acrylate de butyle.

14. Une peinture selon l'une quelconque des revendications précédentes, où le monomère B représente de 15 à 30% en poids de la composition monomérique.

15. Une peinture selon l'une quelconque des revendications précédentes, où le comonomère C est choisi parmi les alkyles méthacrylates en C₁-C₄ ou leurs mélanges.

16. Une peinture selon la revendication 15, où le comonomère C est le méthyle méthacrylate.

17. Une peinture selon l'une quelconque des revendications 1 à 3, et 10 à 16, où le rapport pondéral entre le composant (i)(a) et le composant (ii) varie de 20:80 à 60:40.

18. Une peinture selon la revendication 17, où le rapport pondéral entre le composant (i) (a) et le composant (ii) varie de 25:75 à 50:50.

19. Une peinture selon l'une quelconque des revendications 1, 2 et 4 à 16, où le rapport pondéral entre le composant (i)(b) et le composant (ii) varie de 1:20 à 2:3.

20. Une peinture selon l'une quelconque des revendications précédentes, où le copolymère (ii) contient jusqu'à 5% en poids d'acide acrylique et/ou méthacrylique en place de l'ester correspondant.

21. Une peinture selon l'une quelconque des revendications précédentes, où le pigment métallifère partiellement soluble est choisi parmi l'oxyde de zinc, l'oxyde cuivreux, le thiocyanate de cuivre ou leurs mélanges.

22. Une peinture selon la revendication 21, où le pigment métallifère partiellement soluble est un mélange comprenant au moins 25% en poids d'oxyde et/ou de thiocyanate cuivreux, la différence étant l'oxyde de zinc.
